# EUROPÄISCHE PATENTANMELDUNG

(11) **EP 2 796 212 A1**
(43) Veröffentlichungstag der Anmeldung: **29.10.2014**
(21) Anmeldenummer: 14158093.6
(22) Anmeldetag: 17.12.2008
(51) Int. Cl.: B08B 3/02, F16H 57/08, F16H 23/00

(54) **Antriebsvorrichtung für Hochdruckreinigungsgerät**

(30) Priorität: 21.12.2007 DE 102007063541
(62) Teilanmeldung aus: 08866868.6
(71) Anmelder: Alfred Kärcher GmbH & Co. KG, 71364 Winnenden (DE)
(72) Erfinder: Müller, Wolfgang, 73630 Remshalden (DE); Maier, Thomas, 71554 Weissach im Tal (DE); Lorenz, Reinhard, 71573 Allmersbach im Tal (DE)
(74) Vertreter: Hoeger, Stellrecht & Partner Patentanwälte

(57) **Zusammenfassung**

Die Erfindung betrifft eine Antriebsvorrichtung für ein Hochdruckreinigungsgerät, mit einem Motor (12), dessen Motorwelle (14) über ein Planetengetriebe (16) mit einer Taumelscheibe (18) gekoppelt ist, wobei das Planetengetriebe (16) ein drehfest mit der Motorwelle (14) verbundenes Sonnenrad (26) aufweist, das mit drehbar an einem Planetenträger (35) gelagerten Planetenrädern (28,29) kämmt, die mit einem innen verzahnten Hohlrad (31) in Eingriff stehen und mit ihrer dem Planetenträger (35) abgewandten Stirnseite an ein Stützelement (60) gleitend anlegbar sind, und wobei die Taumelscheibe (18) axial über ein Stützlager von einer Lagerplatte (40) abgestützt ist. Um die Antriebsvorrichtung derart auszubilden, dass sie eine verbesserte Lebensdauer aufweist, wird erfindungsgemäß vorgeschlagen, dass die Lagerplatte (40) in eine Aufnahme (42,74) eintaucht, welche die Lagerplatte (40) in axialer und radialer Richtung stützt.

## Beschreibung

Die Erfindung betrifft eine Antriebsvorrichtung für ein Hochdruckreinigungsgerät, mit einem Motor, dessen Motorwelle über ein Planetengetriebe mit einer Taumelscheibe gekoppelt ist, wobei das Planetengetriebe ein drehfest mit der Motorwelle verbundenes Sonnenrad aufweist, das mit drehbar an einem Planetenträger gelagerten Planetenrädern kämmt, die mit einem innen verzahnten Hohlrad in Eingriff stehen und mit ihrer dem Planetenträger abgewandten Stirnseite an ein Stützelement gleitend anlegbar sind, und wobei die Taumelscheibe axial über ein Stützlager von einer Lagerplatte abgestützt ist.

Mittels einer derartigen Antriebsvorrichtung kann die Kolbenpumpe eines Hochdruckreinigungsgerätes angetrieben werden. Die Taumelscheibe überträgt die Drehbewegung der Motorwelle in eine hin- und hergehende Bewegung der Kolben der Kolbenpumpe. Die Kolben können hierzu an einer schräg zur Motorwelle ausgerichteten Druckplatte anliegen, die über ein Taumelscheibenlager an der Taumelscheibe anliegt. Die Taumelscheibe ist über ein Planetengetriebe mit der Motorwelle gekoppelt, sie kann beispielsweise drehfest mit dem Planetenträger verbunden sein, an dem mehrere, vorzugsweise drei, Planetenräder drehbar gelagert sind. Die Planetenräder stehen einerseits mit dem drehfest mit der Motorwelle verbundenen Sonnenrad und andererseits mit dem die Planetenräder umgebenden innen verzahnten Hohlrad in Eingriff.

Die Planetenräder sind häufig axial verschiebbar am Planetenträger gehalten und liegen während des Betriebes der Antriebsvorrichtung mit ihrer dem Planetenträger abgewandten Stirnseite gleitend an einem Stützelement an. Das Stützelement kann beispielsweise von einem Gehäuseteil des Planetengetriebes oder auch von einem Motorflansch gebildet sein. Die gleitende Anlage der Planetenräder am Stützelement führt aufgrund der auftretenden Reibung zu einem Verschleiß, der die Lebensdauer der Antriebsvorrichtung beeinträchtigt.

Aufgabe der vorliegenden Erfindung ist es, eine Antriebsvorrichtung der eingangs genannten Art derart weiterzubilden, dass sie eine verbesserte Lebensdauer aufweist.

Diese Aufgabe wird durch eine Antriebsvorrichtung mit den Merkmalen von Patentanspruch 1 gelöst.

Die Taumelscheibe wird in axialer Richtung über ein Stützlager von einer Lagerplatte abgestützt. In vielen Fällen erfolgt die axiale Festlegung der Lagerplatte dadurch, dass sie stirnseitig auf den Zähnen des Hohlrades aufsitzt. Es hat sich jedoch gezeigt, dass die Lebensdauer der Antriebsvorrichtung verbessert und dessen Montagekosten verringert werden können, wenn die Lagerplatte in eine Aufnahme eintaucht, die die Lagerplatte in axialer und radialer Richtung abstützt. In der Aufnahme ist die Lagerplatte zuverlässig gehalten und die mechanische Belastung der Zähne des Hohlrades kann reduziert werden. Dadurch kann die Lebensdauer der Antriebsvorrichtung verbessert werden.

Bevorzugt nimmt die Aufnahme die Lagerplatte passgenau auf. Beispielsweise kann die Lagerplatte über eine Spielpassung oder eine Presspassung in die Aufnahme eingefügt sein.

Vorzugsweise kann die Lagerplatte in die Aufnahme eingepresst oder eingelegt werden.

Um die Montage der Antriebsvorrichtung weiter zu vereinfachen, ist es günstig, wenn die Aufnahme einen sich in axialer Richtung erweiternden Einführabschnitt zum Einführen der Lagerplatte aufweist sowie einen zylinderförmigen Halteabschnitt zum Halten der Lagerplatte. Der Einführabschnitt kann beispielsweise als konische Erweiterung ausgestaltet oder auch bogenförmig gekrümmt sein. Der Einführabschnitt bildet eine Montagehilfe aus, die das Einsetzen der Lagerplatte in den Halteabschnitt der Aufnahme erleichtert.

Die Aufnahme ist bei einer vorteilhaften Ausgestaltung der Erfindung als Tragring ausgestaltet, der in ein das Planetengetriebe und/oder die Taumelscheibe umgebendes Gehäuse einsetzbar ist. Die Aufnahme bildet somit ein eigenständiges Bauteil aus, das die Lagerplatte aufnimmt.

Der Tragring kann an einer Schulter eines das Planetengetriebe und/oder die Taumelscheibe umgebenden Gehäuses anliegen. Das Gehäuse kann beispielsweise einen ersten, dem Motor zugewandten zylinderförmigen Gehäuseabschnitt aufweisen, der sich über die Schulter in radialer Richtung erweitert und in einen zweiten zylinderförmigen Gehäuseabschnitt übergeht, der dem Motor abgewandt ist. Im Bereich der Schulter kann der Tragring positioniert werden.

Alternativ kann vorgesehen sein, dass die Aufnahme in ein das Planetengetriebe und/oder die Taumelscheibe umgebende Gehäuse eingeformt ist. Die Aufnahme bildet bei einer derartigen Ausgestaltung zusammen mit dem Gehäuse ein einteiliges Bauteil aus. Dadurch können die Montage- und Herstellungskosten zusätzlich reduziert werden.

Günstig ist es, wenn in der die Lagerplatte aufnehmenden Aufnahme mindestens ein Kanal angeordnet ist, der die zu beiden Seiten der Lagerplatte angeordneten Bereiche der Antriebsvorrichtung miteinander verbindet. Der Kanal kann in die Aufnahme beispielsweise eingeformt sein. Er ermöglicht einen Ölausgleich zwischen dem in axialer Richtung vor der Lagerplatte angeordneten Bereich der Antriebsvorrichtung und dem in axialer Richtung hinter der Lagerplatte angeordneten Bereich. Der vordere Bereich nimmt insbesondere die Taumelscheibe auf. Öl, das im Bereich der Taumelscheibe angeordnet ist, kann über den Kanal in einen hinteren Bereich gelangen, der das Planetengetriebe aufweist. Über den Kanal ist somit eine ausreichende Schmierung des Planetengetriebes sichergestellt.

Günstig ist es, wenn in die Aufnahme mindestens zwei einander diametral gegenüberliegende Kanäle ausgebildet sind, denn dies ermöglicht einen besonders strömungsgünstigen Ölausgleich innerhalb der Antriebsvorrichtung.

Wie bereits erläutert, wird die Lagerplatte von der Aufnahme in axialer und in radialer Richtung abgestützt. Zur axialen Abstützung weist die Aufnahme einen Boden auf. Dieser ist vorzugsweise in axialer Richtung vor den der Taumelscheibe zugewandten Stirnkanten der Zähne des Hohlrades angeordnet, so dass die Zähne nicht durch die Lagerplatte beeinträchtigt werden. Alternativ kann vorgesehen sein, dass der Boden der Aufnahme axial auf gleicher Höhe wie die Stirnkanten der Zähne angeordnet ist. Auch dadurch werden die Zähne entlastet, da sich die Lagerplatte bei einer derartigen Ausgestaltung nicht nur auf den Stirnkanten der Zähne sondern zusätzlich auch am Boden der Aufnahme abstützt.

Bevorzugt umfasst die Antriebsvorrichtung ein das Planetengetriebe und/oder die Taumelscheibe aufnehmendes Gehäuse sowie mindestens einen die Motorwelle lagernden Motorflansch, wobei das Gehäuse und ein Motorflansch stoffschlüssig oder einstückig miteinander verbunden sind. Das Gehäuse kann mit dem Motorflansch beispielsweise verklebt oder verschweißt sein. Von besonderem Vorteil ist es, wenn das Gehäuse und der Motorflansch ein einteiliges Kunststoffformteil ausbilden. Letzteres kann beispielsweise aus einem faserverstärktem Kunststoffmaterial gefertigt sein.

Die Lebensdauer der Antriebsvorrichtung kann auch durch die Bereitstellung eines verschleißhemmenden Anlagebereichs, an den die Planetenräder gleitend anlegbar sind, verbessert werden. Dadurch kann der Verschleiß der Planetenräder reduziert werden und Reibungsverluste können vermindert werden.

Der verschleißhemmende Anlagebereich kann sich über die gesamte Oberfläche des Stützelementes erstrecken. Es kann aber auch vorgesehen sein, dass beispielsweise nur die den Planetenrädern zugewandte Stirnseite des Stützelements den verschleißhemmenden Anlagebereich ausbildet.

Der verschleißhemmende Anlagebereich des Stützelementes bildet einen Anschlag, der die axiale Bewegung der Planetenräder relativ zum Planetenträger in die dem Motor zugewandte Richtung begrenzt. Eine axiale Festlegung der Planetenräder am Planetenträger kann dadurch entfallen.

Das Stützelement ist bevorzugt an einem Motorflansch des Motors angeordnet. Der Motorflansch dient der drehbaren Lagerung der Motorwelle und ist auf der der Taumelscheibe abgewandten Seite des Planetengetriebes angeordnet.

Bevorzugt taucht das Stützelement in eine Ausnehmung des Motorflansches ein.

Von Vorteil ist es, wenn das Stützelement formschlüssig mit dem Motorflansch verbunden ist. Das Stützelement kann beispielsweise in eine Ausnehmung des Motorflansches eingepresst oder eingelegt sein. Es kann auch vorgesehen sein, dass das Stützelement mit Hilfe von Verbindungselementen, beispielsweise Verbindungsschrauben oder Verbindungsstiften, mit dem Motorflansch verbunden ist.

Die Bereitstellung eines Stützelementes mit einem verschleißhemmenden Anlagebereich für die Planetenräder ist insbesondere dann von Vorteil, wenn die Planetenräder aus einem Kunststoffmaterial gefertigt sind, beispielsweise aus einem POM-(Polyoximethylen)Material, das bevorzugt keine Faserverstärkung aufweist.

Das Stützelement ist bei einer vorteilhaften Ausgestaltung als konzentrisch zur Motorwelle angeordneter Stützring ausgebildet.

Vorzugsweise ist das Stützelement aus einem Kunststoffmaterial gefertigt, beispielsweise aus einem POM-(Polyoximethylen)Material, das bei einer vorteilhaften Ausführungsform keine Faserverstärkung aufweist. Das nicht-faserverstärkte POM-Material weist nur eine sehr geringe Reibung bezüglich der gleitend anliegenden Planetenräder auf, so dass die den Planetenrädern zugewandte Stirnfläche des Stützelementes einen verschleiß- und reibungsvermindernden Anlagebereich ausbildet.

Alternativ kann vorgesehen sein, dass das Stützelement eine verschleiß- und reibungsvermindernde Beschichtung umfasst, an der die Planetenräder stirnseitig gleitend anliegen.

Gemäß einer weiteren Alternative kann vorgesehen sein, dass das Stützelement als mehrkomponentiges Spritzgussteil, insbesondere als zweikomponentiges Spritzgussteil ausgestaltet ist, wobei die den Planetenrädern zugewandte Komponente den verschleiß- und reibungsvermindernden Anlagebereich ausbildet.

Von besonderem Vorteil ist es, wenn das Stützelement und die Planetenräder aus demselben Kunststoffmaterial gefertigt sind, das keine Faserverstärkung aufweist. Es hat sich gezeigt, dass dadurch der Verschleiß der Planetenräder besonders gering gehalten werden kann.

Bevorzugt umfasst das Planetengetriebe ein Gehäuse, das stirnseitig von einem das Stützelement haltenden Motorflansch abgedeckt ist. Das Gehäuse und der Motorflansch bilden eine becherförmige Baugruppe aus, an deren Boden das Stützelement angeordnet ist.

Bevorzugt ist das Gehäuse stoffschlüssig oder einteilig mit dem Motorflansch verbunden. Das Gehäuse kann beispielsweise mit dem Motorflansch verklebt oder verschweißt sein.

Von besonderem Vorteil ist es, wenn das Gehäuse und der Motorflansch ein einteiliges Kunststoffformteil ausbilden. Günstigerweise ist das Kunststoffformteil aus einem faserverstärkten Kunststoffmaterial gefertigt, denn dadurch kann die mechanische Belastbarkeit des Kunststoffformteiles erhöht werden.

Die nachfolgende Beschreibung zweier bevorzugter Ausführungsformen der Erfindung dient im Zusammenhang mit der Zeichnung der näheren Erläuterung. Es zeigen:
- Figur 1:: eine schematische Schnittansicht einer ersten Ausführungsform einer erfindungsgemäßen Antriebsvorrichtung;
- Figur 2:: eine vergrößerte Schnittansicht von Detail X aus Figur 1;
- Figur 3:: eine schematische Schnittansicht einer zweiten Ausführungsform einer erfindungsgemäßen Antriebsvorrichtung und
- Figur 4:: eine vergrößerte Schnittansicht von Detail Y aus Figur 3.

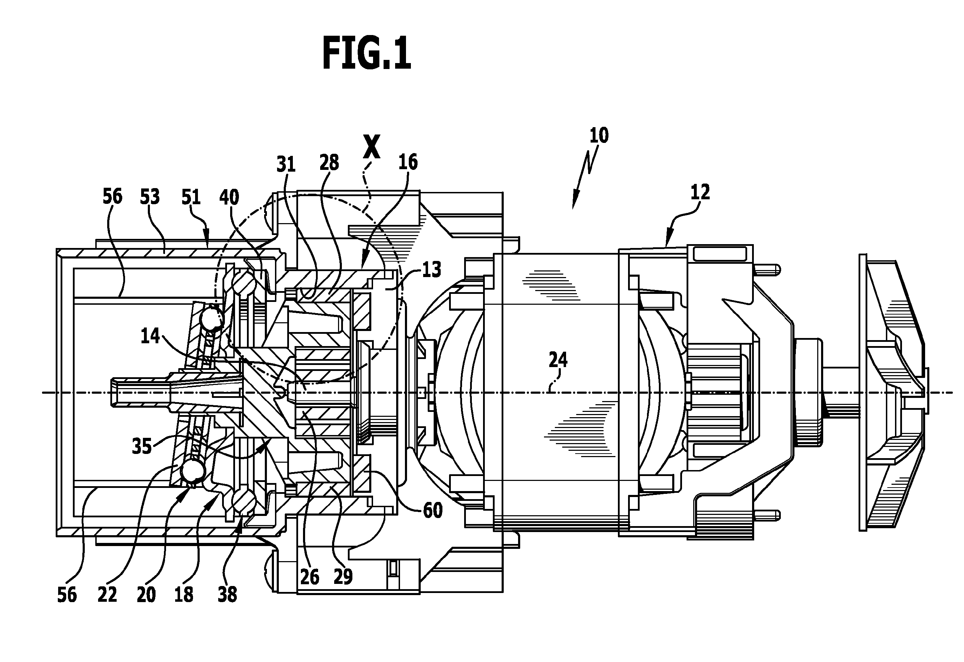

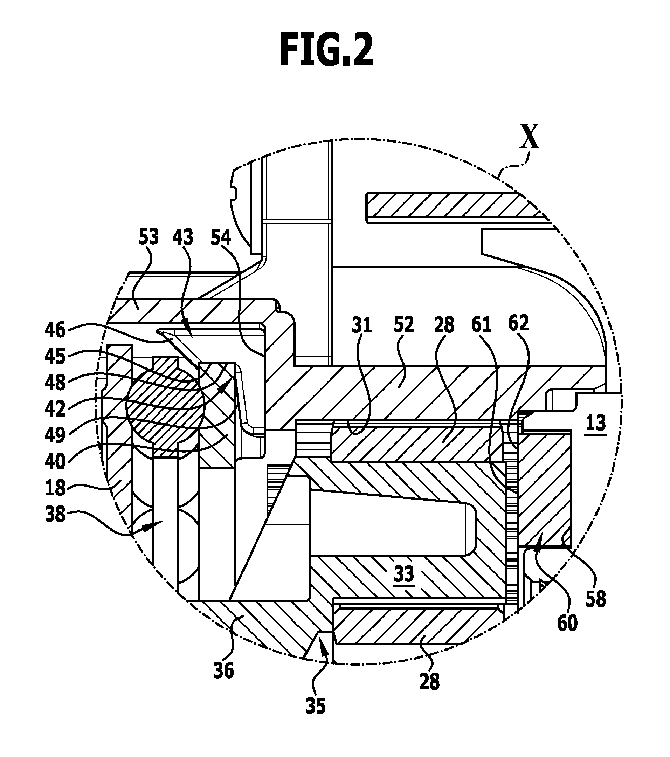

In den Figuren 1 und 2 ist schematisch eine erste Ausführungsform einer erfindungsgemäßen Antriebsvorrichtung dargestellt, die insgesamt mit dem Bezugszeichen 10 belegt ist. Mittels der Antriebsvorrichtung 10 kann die Kolbenpumpe eines Hochdruckreinigungsgerätes angetrieben werden. Sie umfasst hierzu einen Elektromotor 12 mit einer drehbar an einem Motorflansch 13 gelagerten Motorwelle 14, die über ein Planetengetriebe 16 drehfest mit einer Taumelscheibe 18 gekoppelt ist, an der unter Zwischenlage eines Taumelscheibenlagers 20 eine ebene, zur Längsachse 24 der Motorwelle 14 geneigte Druckplatte 22 anliegt. An der Druckplatte 22 können in üblicher Weise in der Zeichnung nicht dargestellte, an sich bekannte Kolben der von der Antriebsvorrichtung 10 anzutreibenden Kolbenpumpe anliegen. Die Kolben können in Richtung der Druckplatte federelastisch vorgespannt werden und durch die taumelnde Bewegung der Druckplatte 22 können die Kolben parallel zur Längsachse 24 hin und her verschoben werden.

Das Planetengetriebe 16 weist ein zentrales Sonnenrad 26 auf, das drehfest an der Motorwelle 14 gehalten ist und mit mehreren Planetenrädern kämmt, wobei zwei Planetenräder 28, 29 in Figur 1 erkennbar sind. Die Planetenräder 28, 29 stehen einerseits mit dem Sonnenrad 26 und andererseits mit einem koaxial zum Sonnenrad 26 ausgerichteten, innen verzahnten Hohlrad 31 in Eingriff. Die Planetenräder 28, 29 sind jeweils an einem Tragzapfen 33 axial verschieblich und drehbar gehalten. Die Tragzapfen 33 bilden einen Teil eines Planetenträgers 35 aus, indem sie einstückig mit einem koaxial zur Längsachse 24 ausgerichteten zentralen Tragteil 36 des Planetenträgers 35 verbunden sind. Am Tragteil 36 ist die Taumelscheibe 18 drehfest gehalten, die sich über ein Stützlager 38 an einer Lagerplatte 40 in axialer Richtung abstützt. Die Lagerplatte 40 wird von einer Aufnahme 42 aufgenommen, die von einem Tragring 43 gebildet ist. Dies wird insbesondere aus Figur 2 deutlich. Die Lagerplatte 40 taucht formschlüssig in einen zylinderförmigen Halteabschnitt 45 der Aufnahme 42 ein. Auf der dem Elektromotor 12 abgewandten Seite schließt sich an den Halteabschnitt 45 ein Einführabschnitt 46 der Aufnahme 42 an. Der Einführabschnitt 46 erweitert sich konisch in die dem Elektromotor 12 abgewandte Richtung und erleichtert das Einsetzen der Lagerplatte 40 in die Aufnahme 42.

Der Halteabschnitt 45 umfasst einen zylinderförmigen Mantel 48, an dem die Lagerplatte 40 mit ihrer Außenseite anliegt und der die Lagerplatte 40 in radialer Richtung bezogen auf die Längsachse 24 festlegt. Außerdem weist der Halteabschnitt 45 einen Boden 49 auf, an dem sich die Lagerplatte 40 in axialer Richtung abstützt.

Das Planetengetriebe 16 und die Taumelscheibe 18 sind von einem Gehäuse 51 umgeben mit einem zylinderförmigen, koaxial zur Längsachse 24 ausgerichteten ersten Gehäuseteil 52, das vom Hohlrad 31 ausgebildet ist, und mit einem zweiten Gehäuseteil 53, das die Taumelscheibe 18 in Umfangsrichtung umgibt und koaxial zum ersten Gehäuseteil 52 ausgerichtet ist. Über eine Schulter 54 geht das erste Gehäuseteil 52 einstückig in das zweite Gehäuseteil 53 über. An der Schulter 54 liegt der die Aufnahme 42 ausbildende Tragring 43 an.

Innenseitig weist das zweite Gehäuseteil 53 mehrere parallel zur Längsachse 24 verlaufende, radial nach innen vorspringende Führungsrippen 56 auf, die das Einsetzen des Tragringes 43 sowie der Lagerplatte 40 und der Taumelscheibe 18 in das zweite Gehäuseteil 53 erleichtern.

Das erste Gehäuseteil 42 wird vom Motorflansch 13 abgedeckt. Dieser weist den Planetenrädern 28, 29 zugewandt eine ringförmige Ausnehmung 58 auf, in die ein Stützring 60 formschlüssig eingefügt ist. Der Stützring 60 ist ebenso wie die Planetenräder 28, 29 aus einem Kunststoffmaterial gefertigt, vorzugsweise aus einem POM-Material, das keine Faserverstärkung aufweist. Mit seiner den Planetenrädern 28, 29 zugewandten Stirnseite 61 bildet der Stützring 60 einen verschleiß- und reibungsvermindernden Anlagebereich 62 für die Planetenräder 28, 29 aus. Die in axialer Richtung beweglich an den Tragzapfen 23 gehaltenen Planetenräder können somit während des Betriebes der Antriebsvorrichtung 10 unter Aufrechterhaltung ihrer Drehbewegung am Anlagebereich 62 des Stützrings 60 gleitend anliegen. Der aus demselben Kunststoffmaterial wie die Planetenräder 28, 29 gefertigte Stützring 60 weist nur eine geringe Reibung gegenüber den Planetenrädern 28, 29 auf. Deshalb unterliegen die Planetenräder 28, 29 während des Betriebes der Antriebsvorrichtung 10 nur einem geringen Verschleiß. Die Antriebsvorrichtung 10 zeichnet sich daher durch eine lange Lebensdauer aus.

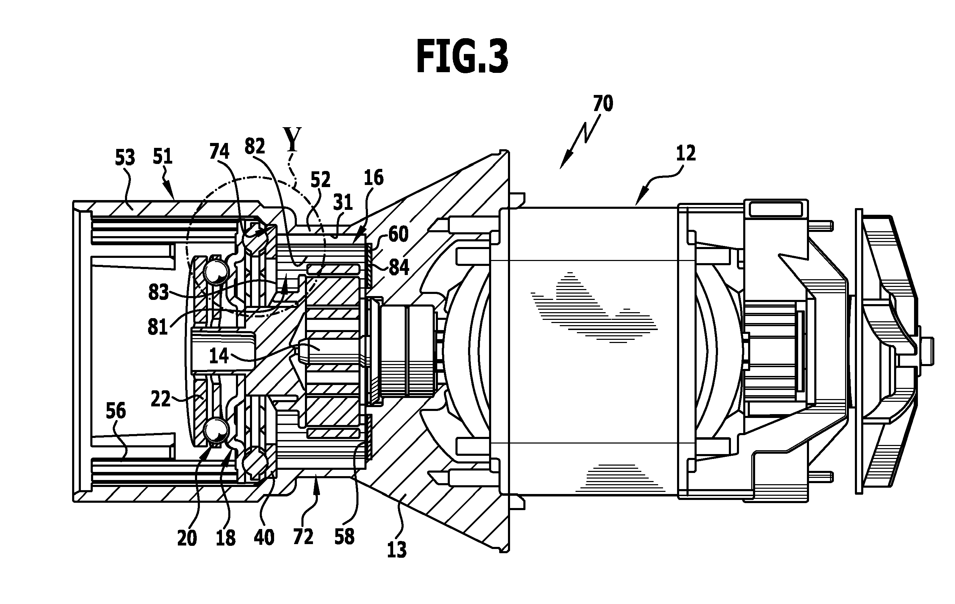

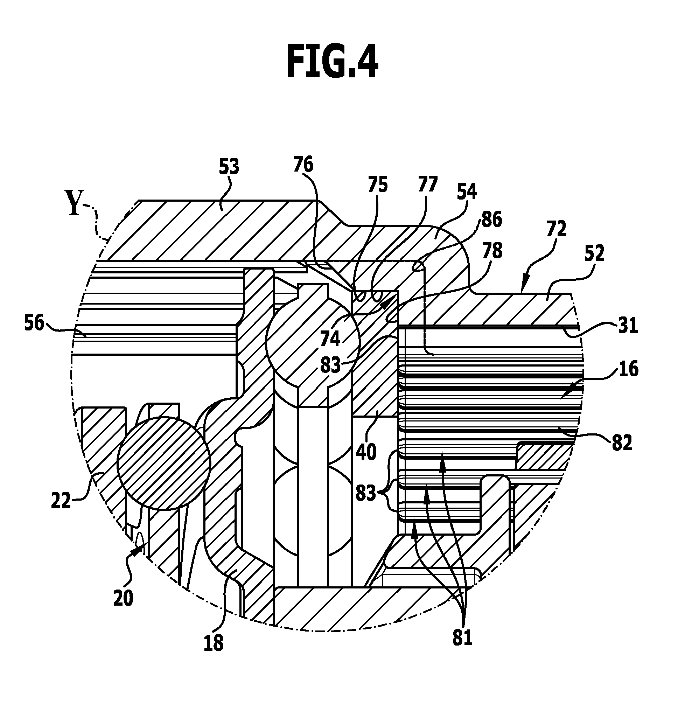

Die Lebensdauer der Antriebsvorrichtung 10 wird zusätzlich verbessert durch die Bereitstellung der Aufnahme 42, in die die Lagerplatte 40 formschlüssig eintaucht. Die Aufnahme 42 bildet ein Gegenlager für die Lagerplatte 40 und nimmt die in axialer und in radialer Richtung wirkenden Kräfte zuverlässig auf. In den Figuren 3 und 4 ist eine zweite Ausführungsform einer erfindungsgemäßen Antriebsvorrichtung dargestellt, die insgesamt mit dem Bezugszeichen 70 belegt ist.

Die Antriebsvorrichtung 70 ist weitgehend identisch ausgebildet wie die voranstehend erläuterte Antriebsvorrichtung 10. Für identische Bauteile werden daher in den Figuren 3 und 4 dieselben Bezugszeichen verwendet wie in den Figuren 1 und 2 und zur Beschreibung dieser Bauteile wird zur Vermeidung von Wiederholungen auf die voranstehenden Erläuterungen Bezug genommen.

Die Antriebsvorrichtung 70 unterscheidet sich von der Antriebsvorrichtung 10 dadurch, dass das Gehäuse 51 und der Motorflansch 13 einstückig miteinander verbunden sind. Sie bilden ein einteiliges Kunststoffformteil 72 aus, das aus einem faserverstärkten Kunststoffmaterial gefertigt ist. Im schulterförmigen Übergangsbereich zwischen dem das erste Gehäuseteil 52 des Kunststoffformteiles 72 ausbildenden Hohlrad 31 und dem die Taumelscheibe 18 in Umfangsrichtung umgebenden zweiten Gehäuseteil 53 bildet das Kunststoffformteil 72 eine Aufnahme 74 aus mit einem Halteabschnitt 75 und einem Einführabschnitt 76, in die die Lagerplatte 40 eingesetzt oder eingepresst ist. Im Unterschied zur Antriebsvorrichtung 10 entfällt also bei der Antriebsvorrichtung 70 ein separater Tragring, der eine Aufnahme für die Lagerplatte 40 ausbildet, vielmehr ist die Aufnahme 74 in das einteilige Kunststoffformteil 72 eingeformt. Der Halteabschnitt 75 der Aufnahme 74 nimmt die Lagerplatte 40 formschlüssig auf, wobei er einen zylindrischen Mantel 77 und einen ringförmigen Boden 78 umfasst zur axialen und radialen Abstützung der Lagerplatte 40. An den Halteabschnitt 75 schließt sich auf der dem Elektromotor 12 abgewandten Seite der Einführabschnitt 76 an in Form einer konischen Erweiterung.

Das Hohlrad 31, dies wird insbesondere aus Figur 4 deutlich, weist innenseitig eine Vielzahl von Zähnen 81 auf, die radial nach innen gerichtet sind und eine parallel zur Längsachse 24 verlaufende Innenkante 82 und radial verlaufende vordere und hintere Stirnkanten 83 bzw. 84 umfassen. Die vordere Stirnkante 83 ist der Taumelscheibe 18 zugewandt, und die hintere Stirnkante 84 ist der Taumelscheibe 18 abgewandt. Bei der in den Figuren 3 und 4 dargestellten Ausführungsform ist der Boden 78 der Aufnahme 74 axial in Höhe der vorderen Stirnkanten 83 angeordnet. Die Lagerplatte 40 sitzt damit auf dem Boden 78 und auf den vorderen Stirnkanten 83 auf, sie wird also in axialer Richtung zum einen vom Boden 78 und zum anderen von den vorderen Stirnkanten 83 abgestützt. Dies macht deutlich, dass die mechanische Belastung der Zähne 81 durch die Bereitstellung der Aufnahme 74 verringert wird.

Um einen Ölausgleich zu ermöglichen zwischen dem Innenraum des ersten Gehäuseteils 52 und dem Innenraum des zweiten Gehäuseteils 53 sind in die Aufnahme 74 der Antriebsvorrichtung 70 einander diametral gegenüberliegend zwei Kanäle 86 eingeformt, die die beiden Innenräume miteinander verbinden. Ein Kanal 86 ist in Figur 4 gestrichelt dargestellt. Über die Kanäle 86 kann Öl die Lagerplatte 40 umgehend beispielsweise ausgehend von dem die Taumelscheibe 18 aufnehmenden Bereich in den Bereich des Planetengetriebes 16 strömen, so dass über die Kanäle 86 eine ausreichende Schmierung des Planetengetriebes 16 sichergestellt ist. In Umfangsrichtung erstrecken sich die Kanäle 86 nur über einen sehr beschränkten Winkelbereich, beispielsweise über einen Winkelbereich von weniger als 20°, beispielsweise über einen Winkelbereich von etwa 15°. Dadurch ist sichergestellt, dass sich die Lagerplatte 40 trotz der in die Aufnahme 74 eingeformten Kanäle 86 sowohl in radialer Richtung als auch in axialer Richtung zuverlässig am Mantel 77 bzw. am Boden 78 der Aufnahme 74 abstützen kann, die die Lagerplatte 40 passgenau aufnimmt. Es kann beispielsweise eine Spielpassung oder auch eine Presspassung zwischen der Lagerplatte 40 und der Aufnahme 74 vorgesehen sein. In entsprechender Weise kann bei der in den Figuren 1 und 2 dargestellten Antriebsvorrichtung 10 zwischen dem Tragring 43 und der in die Aufnahme 42 des Tragrings 43 eingesetzten Lagerplatte 40 eine Spiel- oder Presspassung zum Einsatz kommen.

Wie bereits erwähnt, ist das Kunststoffformteil 72 aus einem faserverstärkten Kunststoffmaterial hergestellt. Im Gegensatz hierzu sind die Planetenräder 28, 29 und der Stützring 60 aus einem Kunststoffmaterial, vorzugsweise einem POM-Material, ohne Faserverstärkung gefertigt. Die Reibung zwischen den Planetenrädern 28, 29 und dem Stützring 60 kann somit auch bei der Antriebsvorrichtung 70 sehr gering gehalten werden, so dass die Planetenräder 28, 29 nur einem sehr geringen Verschleiß unterliegen. Auch die Antriebsvorrichtung 70 zeichnet sich somit durch eine lange Lebensdauer aus.

Die Erfindung betrifft ferner die folgenden besonderen Ausführungsformen der Erfindung:
1. Antriebsvorrichtung für ein Hochdruckreinigungsgerät, mit einem Motor, dessen Motorwelle über ein Planetengetriebe mit einer Taumelscheibe gekoppelt ist, wobei das Planetengetriebe ein drehfest mit der Motorwelle verbundenes Sonnenrad aufweist, das mit drehbar an einem Planetenträger gelagerten Planetenrädern kämmt, die mit einem innen verzahnten Hohlrad in Eingriff stehen und mit ihrer dem Planetenträger abgewandten Stirnseite an ein Stützelement gleitend anlegbar sind, dadurch gekennzeichnet, dass das Stützelement (60) einen verschleißhemmenden Anlagebereich (62) für die Planetenräder (28, 29) aufweist.
2. Antriebsvorrichtung nach Anspruch 1, dadurch gekennzeichnet, dass das Stützelement (60) an einem Motorflansch (13) des Motors (12) angeordnet ist.
3. Antriebsvorrichtung nach Anspruch 2, dadurch gekennzeichnet, dass das Stützelement (60) in eine Ausnehmung (58) des Motorflanschs (13) eintaucht.
4. Antriebsvorrichtung nach Anspruch 2 oder 3, dadurch gekennzeichnet, dass das Stützelement (60) formschlüssig mit dem Motorflansch (13) verbunden ist.
5. Antriebsvorrichtung nach einem der voranstehenden Ansprüche, dadurch gekennzeichnet, dass die Planetenräder (28, 29) aus einem Kunststoffmaterial gefertigt sind.
6. Antriebsvorrichtung nach Anspruch 5, dadurch gekennzeichnet, dass die Planetenräder (28, 29) aus einem POM-Material ohne Faserverstärkung gefertigt sind.
7. Antriebsvorrichtung nach einem der voranstehenden Ansprüche, dadurch gekennzeichnet, dass das Stützelement als konzentrisch zur Motorwelle (14) ausgerichteter Stützring (60) ausgebildet ist.
8. Antriebsvorrichtung nach einem der voranstehenden Ansprüche, dadurch gekennzeichnet, dass das Stützelement (60) aus einem Kunststoffmaterial gefertigt ist.
9. Antriebsvorrichtung nach Anspruch 8, dadurch gekennzeichnet, dass das Stützelement (60) aus einem POM-Material ohne Faserverstärkung gefertigt ist.
10. Antriebsvorrichtung nach einem der voranstehenden Ansprüche, dadurch gekennzeichnet, dass das Stützelement (60) und die Planetenräder (28, 29) aus demselben Kunststoffmaterial gefertigt sind, das keine Faserverstärkung aufweist.
11. Antriebsvorrichtung nach einem der voranstehenden Ansprüche, dadurch gekennzeichnet, dass das Planetengetriebe (16) ein Gehäuse (51) aufweist, das stirnseitig von einem das Stützelement (60) halternden Motorflansch (13) abgedeckt ist.
12. Antriebsvorrichtung nach Anspruch 11, dadurch gekennzeichnet, dass das Gehäuse (51) und der Motorflansch (13) stoffschlüssig oder einteilig miteinander verbunden sind.
13. Antriebsvorrichtung nach Anspruch 12, dadurch gekennzeichnet, dass das Gehäuse (51) und der Motorflansch (13) als einteiliges Kunststoffformteil (72) ausgestaltet sind.
14. Antriebsvorrichtung mit den Merkmalen des Oberbegriffes von Anspruch 1, insbesondere nach einem der voranstehenden Ansprüche, wobei die Taumelscheibe axial über ein Stützlager von einer Lagerplatte abgestützt ist, dadurch gekennzeichnet, dass die Lagerplatte (40) in eine Aufnahme (42; 74) eintaucht, die die Lagerplatte (40) in axialer und radialer Richtung abstützt.
15. Antriebsvorrichtung nach Anspruch 14, dadurch gekennzeichnet, dass die Aufnahme (42; 74) die Lagerplatte (40) passgenau aufnimmt.
16. Antriebsvorrichtung nach Anspruch 14 oder 15, dadurch gekennzeichnet, dass die Lagerplatte (40) in die Aufnahme (42; 74) eingepresst oder eingelegt ist.
17. Antriebsvorrichtung nach Anspruch 14, 15 oder 16, dadurch gekennzeichnet, dass die Aufnahme (42; 74) einen sich in axialer Richtung erweiternden Einführabschnitt (46; 76) zum Einführen der Lagerplatte (40) aufweist sowie einen zylinderförmigen Halteabschnitt (45; 75) zum Haltern der Lagerplatte (40).
18. Antriebsvorrichtung nach einem der Ansprüche 14 bis 17, dadurch gekennzeichnet, dass die Aufnahme (42) als Tragring (43) ausgestaltet ist, der in ein das Planetengetriebe (16) und/oder die Taumelscheibe (18) umgebendes Gehäuse (51) einsetzbar ist.
19. Antriebsvorrichtung nach Anspruch 18, dadurch gekennzeichnet, dass der Tragring (43) an einer Schulter (54) des Gehäuses (51) anliegt.
20. Antriebsvorrichtung nach einem der Ansprüche 14 bis 17, dadurch gekennzeichnet, dass die Aufnahme (74) in ein das Planetengetriebe (16) und/oder die Taumelscheibe (18) umgebendes Gehäuse (72) eingeformt ist.
21. Antriebsvorrichtung nach einem der Ansprüche 14 bis 20, dadurch gekennzeichnet, dass in der Aufnahme (74) mindestens ein Kanal (86) angeordnet ist, der die zu beiden Seiten der Lagerplatte (40) angeordneten Bereiche der Antriebsvorrichtung (70) miteinander verbindet.
22. Antriebsvorrichtung nach einem der Ansprüche 14 bis 21, dadurch gekennzeichnet, dass die Aufnahme (42; 74) einen die Lagerplatte (40) axial abstützenden Boden (49; 78) aufweist, der in axialer Richtung vor den oder axial auf gleicher Höhe wie die der Taumelscheibe (18) zugewandten Stirnkanten (83) der Zähne (81) des Hohlrades (31) angeordnet ist.
23. Antriebsvorrichtung nach einem der Ansprüche 14 bis 22, dadurch gekennzeichnet, dass die Antriebsvorrichtung (70) ein das Planetengetriebe (16) und/oder die Taumelscheibe (18) aufnehmendes Gehäuse sowie mindestens einen die Motorwelle lagernden Motorflansch aufweist, wobei das Gehäuse und ein Motorflansch stoffschlüssig oder einstückig miteinander verbunden sind.
24. Antriebsvorrichtung nach Anspruch 23, dadurch gekennzeichnet, dass das Gehäuse und der Motorflansch ein einteiliges, faserverstärktes Kunststoffformteil (72) ausbilden.

## Patentansprüche

1. Antriebsvorrichtung für ein Hochdruckreinigungsgerät, mit einem Motor, dessen Motorwelle über ein Planetengetriebe mit einer Taumelscheibe gekoppelt ist, wobei das Planetengetriebe ein drehfest mit der Motorwelle verbundenes Sonnenrad aufweist, das mit drehbar an einem Planetenträger gelagerten Planetenrädern kämmt, die mit einem innen verzahnten Hohlrad in Eingriff stehen und mit ihrer dem Planetenträger abgewandten Stirnseite an ein Stützelement gleitend anlegbar sind, wobei die Taumelscheibe axial über ein Stützlager von einer Lagerplatte abgestützt ist, **dadurch gekennzeichnet, dass** die Lagerplatte (40) in eine Aufnahme (42; 74) eintaucht, die die Lagerplatte (40) in axialer und radialer Richtung abstützt.

2. Antriebsvorrichtung nach Anspruch 1, **dadurch gekennzeichnet, dass** die Aufnahme (42; 74) die Lagerplatte (40) passgenau aufnimmt.

3. Antriebsvorrichtung nach Anspruch 1 oder 2, **dadurch gekennzeichnet, dass** die Lagerplatte (40) in die Aufnahme (42; 74) eingepresst oder eingelegt ist.

4. Antriebsvorrichtung nach Anspruch 1, 2 oder 3, **dadurch gekennzeichnet, dass** die Aufnahme (42; 74) einen sich in axialer Richtung erweiternden Einführabschnitt (46; 76) zum Einführen der Lagerplatte (40) aufweist sowie einen zylinderförmigen Halteabschnitt (45; 75) zum Haltern der Lagerplatte (40).

5. Antriebsvorrichtung nach einem der Ansprüche 1 bis 4, **dadurch gekennzeichnet, dass** die Aufnahme (42) als Tragring (43) ausgestaltet ist, der in ein das Planetengetriebe (16) und/oder die Taumelscheibe (18) umgebendes Gehäuse (51) einsetzbar ist.

6. Antriebsvorrichtung nach Anspruch 5, **dadurch gekennzeichnet, dass** der Tragring (43) an einer Schulter (54) des Gehäuses (51) anliegt.

7. Antriebsvorrichtung nach einem der Ansprüche 1 bis 4, **dadurch gekennzeichnet, dass** die Aufnahme (74) in ein das Planetengetriebe (16) und/oder die Taumelscheibe (18) umgebendes Gehäuse (72) eingeformt ist.

8. Antriebsvorrichtung nach einem der Ansprüche 1 bis 7, **dadurch gekennzeichnet, dass** in der Aufnahme (74) mindestens ein Kanal (86) angeordnet ist, der die zu beiden Seiten der Lagerplatte (40) angeordneten Bereiche der Antriebsvorrichtung (70) miteinander verbindet.

9. Antriebsvorrichtung nach einem der Ansprüche 1 bis 8, **dadurch gekennzeichnet, dass** die Aufnahme (42; 74) einen die Lagerplatte (40) axial abstützenden Boden (49; 78) aufweist, der in axialer Richtung vor den oder axial auf gleicher Höhe wie die der Taumelscheibe (18) zugewandten Stirnkanten (83) der Zähne (81) des Hohlrades (31) angeordnet ist.

10. Antriebsvorrichtung nach einem der Ansprüche 1 bis 9, **dadurch gekennzeichnet, dass** die Antriebsvorrichtung (70) ein das Planetengetriebe (16) und/oder die Taumelscheibe (18) aufnehmendes Gehäuse sowie mindestens einen die Motorwelle lagernden Motorflansch aufweist, wobei das Gehäuse und ein Motorflansch stoffschlüssig oder einstückig miteinander verbunden sind.

11. Antriebsvorrichtung nach Anspruch 10, **dadurch gekennzeichnet, dass** das Gehäuse und der Motorflansch ein einteiliges, faserverstärktes Kunststoffformteil (72) ausbilden.
